# EUROPÄISCHE PATENTSCHRIFT

(11) **EP 3 616 365 B1**
(45) Veröffentlichungstag und Bekanntmachung des Hinweises auf die Patenterteilung: **22.06.2022**
(21) Anmeldenummer: 18717031.1
(22) Anmeldetag: 10.04.2018
(51) Int. Cl.: H04L 12/28, G06F 9/445, G06F 9/451, G05B 19/418, H04L 12/40, H04L 41/0253, H04L 41/0803, H04L 43/50

(54) **VERFAHREN ZUM BETREIBEN EINES FELDGERÄTS**
METHOD FOR OPERATING A FIELD DEVICE
PROCÉDÉ PERMETTANT DE FAIRE FONCTIONNER UN APPAREIL DE TERRAIN

(30) Priorität: 27.04.2017 DE 102017109030
(43) Veröffentlichungstag der Anmeldung: 04.03.2020
(73) Patentinhaber: Endress+Hauser Process Solutions AG, 4153 Reinach (CH)
(72) Erfinder: MAYER, Michael, 4104 Oberwil (CH); BÜNZLI WURZER, Jürg, 4125 Riehen (CH)
(74) Vertreter: Andres, Angelika Maria
(86) Internationale Anmeldenummer: PCT/EP2018/059100
(87) Internationale Veröffentlichungsnummer: WO 2018/197197

(56) Entgegenhaltungen:
- WO-A2-2005/101149
- GB-A- 2 479 036
- US-A1- 2015 113 423
- "Web Intents - W3C Editor's Draft 11 September 2012", W3C Editor's Draft, 16. Februar 2013 (2013-02-16), XP055258294, Gefunden im Internet: URL:http://web.archive.org/web/20130216082 254/https://dvcs.w3.org/hg/web-intents/raw -file/tip/spec/Overview.html [gefunden am 2016-03-15]

## Beschreibung

Die Erfindung betrifft ein Verfahren zum Betreiben eines in einer Anlage der Automatisierungstechnik eingesetzten Feldgeräts, welches mittels eines ersten drahtgebunden oder drahtlos ausgestalteten Kommunikationsnetzwerks, insbesondere mittels eines Feldbusses der Automatisierungstechnik, mit einer Feldzugriffseinheit, insbesondere mit einer Recheneinheit, mit einem Gateway oder mit einem Edge Device, in Kommunikationsverbindung steht,

Aus dem Stand der Technik sind bereits Feldgeräte bekannt geworden, die in industriellen Anlagen zum Einsatz kommen. In der Automatisierungstechnik ebenso wie in der Fertigungsautomatisierung werden vielfach Feldgeräte eingesetzt. Als Feldgeräte werden im Prinzip alle Geräte bezeichnet, die prozessnah eingesetzt werden und die prozessrelevante Informationen liefern oder verarbeiten. So werden Feldgeräte zur Erfassung und/oder Beeinflussung von Prozessgrößen verwendet. Zur Erfassung von Prozessgrößen dienen Messgeräte, bzw. Sensoren. Diese werden beispielsweise zur Druck- und Temperaturmessung, Leitfähigkeitsmessung, Durchflussmessung, pH-Messung, Füllstandmessung, etc. verwendet und erfassen die entsprechenden Prozessvariablen Druck, Temperatur, Leitfähigkeit, pH-Wert, Füllstand, Durchfluss etc. Zur Beeinflussung von Prozessgrößen werden Aktoren verwendet. Diese sind beispielsweise Pumpen oder Ventile, die den Durchfluss einer Flüssigkeit in einem Rohr oder den Füllstand in einem Behälter beeinflussen können. Neben den zuvor genannten Messgeräten und Aktoren werden unter Feldgeräten auch Remote I/Os, Funkadapter bzw. allgemein Geräte verstanden, die auf der Feldebene angeordnet sind.

Eine Vielzahl solcher Feldgeräte wird von der Endress+Hauser-Gruppe produziert und vertrieben.

In modernen Industrieanlagen sind Feldgeräte in der Regel über Kommunikationsnetzwerke wie beispielsweise Feldbusse (Profibus^{®}, Foundation^{®} Fieldbus, HART^{®}, etc.) mit übergeordneten Einheiten verbunden. Bei den übergeordneten Einheiten handelt es sich um Steuereinheiten, wie beispielsweise eine SPS (speicherprogrammierbare Steuerung) oder einen PLC (Programmable Logic Controller). Die übergeordneten Einheiten dienen unter anderem zur Prozesssteuerung, sowie zur Inbetriebnahme der Feldgeräte. Die von den Feldgeräten, insbesondere von Sensoren, erfassten Messwerte werden über das jeweilige Bussystem an eine (oder gegebenenfalls mehrere) übergeordnete Einheit(en) übermittelt, die die Messwerte gegebenenfalls weiterverarbeiten und an den Leitstand der Anlage weiterleiten. Der Leitstand dient zur Prozessvisualisierung, Prozessüberwachung und Prozessteuerung über die übergeordneten Einheiten. Daneben ist auch eine Datenübertragung von der übergeordneten Einheit über das Bussystem an die Feldgeräte erforderlich, insbesondere zur Konfiguration und Parametrierung von Feldgeräten sowie zur Ansteuerung von Aktoren.

Zur Bedienung der Feldgeräte sind entsprechende Bedienprogramme (Bedientools) notwendig, die auf den übergeordneten Einheiten entweder eigenständig ablaufen (Endress+Hauser FieldCare, Pactware, AMS Fisher-Rosemount, PDM Siemens) oder aber auch in Anwendungen des Leitstands (Siemens PCS7, ABB Symphony, Emerson Delta V) integriert sind. Unter dem Begriff "Bedienen" wird unter anderem ein Parametrieren des Feldgeräts, ein Updaten des Feldgeräts und/oder ein Abfragen und Visualisieren von Prozessdaten und/oder Diagnosedaten des Feldgeräts verstanden.

Die Integration von Feldgeräten in solche Bedienprogramme erfolgt über Gerätetreiber, beziehungsweise über Gerätebeschreibungen. Diese werden von den Geräteherstellern bereitgestellt, damit die übergeordneten Einheiten, beziehungsweise die auf diesen übergeordneten Einheiten ablaufenden Bedienprogramme, die Bedeutung der von den Feldgeräten gelieferten Informationen erkennen und interpretieren können. Ein solches Bedienprogramm, in welches die Gerätebeschreibungen, bzw. Gerätetreiber geladen werden, wird auch als Rahmenapplikation bezeichnet.

Für eine vollumfängliche Bedienung der Feldgeräte sind spezielle Gerätetreiber, so genannte DTMs (Device Type Manager), die den FDT (Field Device Tool) Spezifikationen entsprechen, erhältlich. Viele Feldgerätehersteller liefern für ihre Feldgeräte entsprechende DTMs aus. Die DTMs kapseln alle Variablen und Funktionen des jeweiligen Feldgeräts und bieten meist eine graphische Nutzeroberfläche zum Bedienen der Geräte innerhalb der Rahmenapplikation an.

Neben den übergeordneten Einheiten werden zur Bedienung der Feldgeräte häufig Bedieneinheiten in Form von Client-Rechnern eingesetzt, auf welchen eine entsprechende Rahmenapplikation abläuft. Diese Client-Rechner sind beispielsweise Laptops, aber auch mobile Endgeräte wie beispielsweise Tablet-PCs. Sie werden zur Kommunikation mit den Feldgeräten mit einer mit dem Feldbusnetzwerk verbundenen Feldbuszugriffseinheit verbunden. Auf der Feldbuszugriffseinheit wird ebenfalls eine Rahmenapplikation ausgeführt. Mithilfe eines speziellen Kommunikationstreibers, beispielsweise dem von der Anmelderin für die Rahmenapplikation "Fieldcare" angebotenen "YCommDTMs", ist es möglich, auf die Rahmenapplikation der Feldbuszugriffseinheit zuzugreifen und über diese Zugriff auf die Feldgeräte zu erlangen. Für den Client-Rechner ist die zwischen Feldgerät und Feldbuszugriffseinheit liegende Netzwerkinfrastruktur komplett transparent, da diese lediglich der Feldbuszugriffseinheit bekannt sein muss. Der Client-Rechner muss lediglich die Netzwerkadresse des Feldgerätes, auf welches er zugreifen möchte, kennen.

Neben den bereits erwähnten Bedienprogrammen, bzw. Rahmenapplikationen befinden sich häufig (Cloud-)Applikationen zum Plant Asset Management auf den Bedieneinheiten (beispielsweise "Endress+Hauser W@M"). In diesen werden Geräte und zugehörige Daten (beispielsweise Konfigurationsdaten) verwaltet.

Die Offenlegungsschrift WO2005/101149 A2 betrifft ein Verfahren zur Fernsteuerung eines Feldgerätes unter Verwendung einer Client-Anwendung, die auf einem Handheld-Terminal abläuft, und eines Webservices, der auf einem Rechner abläuft und eine Rahmenanwendung (FDT-Frame) umfasst, welche Feldgeräte unter Verwendung entsprechender Gerätetreiber (DTM-F1, DTM-F2) bedient. Die Kommunikation zwischen der Client-Anwendung und dem Web-Service erfolgt über eine entsprechende Service-Schnittstelle SOAP.

Das Standard Dokument "Web Intents - W3C Editor's Draft 11 September 2012" beschreibt "Web Intents", die eine umfassende Integration zwischen Webanwendungen ermöglichen. Ein Intent ist eine vom Benutzer initiierte Aktion, die von einem Dienst ausgeführt werden soll. Sie besteht aus einer "action"-Zeichenkette, die dem Dienst mitteilt, welche Art von Aktivität der Benutzer erwartet (z. B. "share" oder "edit"), einer "type"-Zeichenkette, die angibt, welche Nutzdaten der Dienst erwarten soll, und den Nutzdaten selbst. Schließlich kann der Dienst auch Daten als Ausgabe an den Client zurückgeben.

Die Offenlegungsschrift US2015/113423 A1 bezieht sich auf ein primäres Gerät zur Konfiguration eines Feldgerätes in Verbindung mit einem sekundären Gerät. Eine Anwendung auf dem primären Gerät greift auf eine Webanwendung auf dem sekundären Gerät zu. Wenn ein Treibervalidator feststellt, dass ein relevanter Treiber für das Feldgerät nicht auf dem primären Gerät installiert ist, wird der relevante Treiber vom sekundären Gerät für die Konfiguration empfangen.

Hier existiert heutzutage noch ein "Bruch" - aus der Plant Asset Management-Applikation heraus können lokal installierte Rahmenapplikation nicht gestartet werden. Das Feldgerät ist zwar in der Plant Asset Management-Applikation sichtbar,
allerdings muss der Bediener manuell die Kommunikationstopologie in der Rahmenapplikation für einen Zugriff auf die Feldgeräte erstellen, was ein fehleranfälliges und zeitaufwendiges Verfahren darstellt.

Ausgehend von dieser Problematik liegt der Erfindung die Aufgabe zugrunde, ein Verfahren vorzustellen, welches auf einfache Art und Weise einen Zugriff auf ein Feldgerät erlaubt.

Die Aufgabe wird durch ein Verfahren zum Betreiben eines in einer Anlage der Automatisierungstechnik eingesetzten Feldgeräts, welches mittels eines ersten drahtgebunden oder drahtlos ausgestalteten Kommunikationsnetzwerks, insbesondere mittels eines Feldbusses der Automatisierungstechnik, mit einer Feldzugriffseinheit, insbesondere mit einer Recheneinheit, mit einem Gateway oder mit einem Edge Device, in Kommunikationsverbindung steht, gelöst, umfassend:
- Aufrufen einer Verknüpfung des Feldgeräts auf einem Client-Rechner, wobei die Verknüpfung zumindest aus einem Protokollfeld und einem Parameterfeld besteht, wobei das Aufrufen der Verknüpfung die folgenden Schritte veranlasst:
   a) Starten einer mit dem Protokollfeld der Verknüpfung zugeordneten ersten Rahmenapplikation auf dem Client-Rechner, insbesondere einer FDT-Rahmenapplikation, eines FDI-Hosts, eines DD-Hosts oder eines EDD-Hosts;
   b) Übergeben der Verknüpfung an die erste Rahmenapplikation und Extrahieren von zumindest einer in dem Parameterfeld enthaltenen Information durch die erste Rahmenapplikation;
   c) Konfigurieren eines Kommunikationspfads zwischen dem Client-Rechner und dem Feldgerät über die Feldzugriffseinheit unter Verwendung der zumindest einen Information;
   d) Öffnen eines dem Feldgerät zugeordneten Gerätetreibers, bzw. einer dem Feldgerät zugeordneten Gerätebeschreibung in der ersten Rahmenapplikation.

Der große Vorteil des erfindungsgemäßen Verfahrens besteht darin, dass auf zeitsparende Art und Weise auf der Bedieneinheit die Infrastruktur zum Zugriff auf ein Feldgerät geladen und konfiguriert wird. Alle hierfür benötigten Informationen befinden sich direkt in der Verknüpfung.

Unter dem Begriff Verknüpfung wird insbesondere eine URL (Uniform Resource Locator)-Verknüpfung verstanden. Diese besteht insbesondere aus einem Protokollfeld und einem Datenfeld, beispielsweise "devconfig://Tagx/yyy". "devconfig" stellt in diesem Beispiel das Protokollfeld dar. In der Registry des Betriebssystems der Bedieneinheit wird der Begriff "devconfig" mit der Rahmenapplikation verknüpft, so dass ein Öffnen einer devconfig-Verknüpfung automatisch besagte Rahmenapplikation startet. Hinter der Trennung "://" beginnt das Parameterfeld. Einzelne Parameter sind hier mittels Schrägstrichen "/" getrennt. Nach Übergabe der Verknüpfung an die Rahmenapplikation wird die Verknüpfung von dieser geparst und die einzelnen Parameter somit extrahiert, beispielsweise hier eine Identifikationsinformation ("TAG x") und eine Netzwerkadresse "yyy". Die Rahmenapplikation konfiguriert anschließend einen Kommunikationspfad zwischen der Bedieneinheit und dem Feldgerät und öffnet den zum Feldgerät passenden Gerätetreiber. Der jeweils passende Gerätetreiber wird insbesondere anhand der übermittelten Identifikationsdaten automatisch ausgewählt. Insbesondere ist vorgesehen, dass sich eine Vielzahl von Gerätetreibern auf dem Client-Rechner befindet, aus welcher der passende Gerätetreiber ausgewählt wird. Es kann für den Fall, dass auf dem Client-Rechner kein passender Gerätetreiber vorhanden ist, vorgesehen sein, dass der Client-Rechner via Internet auf einen Server des Feldgeräteherstellers zugreift und von diesem den passenden Gerätetreiber herunterlädt.

Bei der ersten Rahmenapplikation handelt es sich insbesondere um eine FDT/FDI-Rahmenapplikation oder um einen DD(Device Description)- oder EDD(Electronic Device Description)-Host.

Bei dem ersten Kommunikationsnetzwerk handelt es sich in dem Falle, dass dieses drahtgebunden ausgestaltet ist, beispielsweise um einen Feldbus der Automatisierungstechnik, beispielsweise Foundation Fieldbus, Profibus PA, Profibus DP, HART, CANBus, etc. Es kann sich aber auch um ein modernes industrielles Kommunikationsnetzwerk, beispielsweise um einen "Industrial Ethernet"-Feldbus, insbesondere Profinet, HART-IP oder Ethernet/IP oder um ein aus dem Kommunikationsbereich bekanntes Kommunikationsnetzwerk, beispielsweise Ethernet nach dem TCP/IP-Protokoll, handeln.

In dem Falle, dass das erste Kommunikationsnetzwerk drahtlos ausgestaltet ist, handelt es sich bei diesem insbesondere um WirelessHART, Bluetooth, Wifi, ZigBee, etc.

Typischerweise besteht das erste Kommunikationsnetzwerk aus mehreren Teilnetzwerken, sogenannten Netzwerkebenen, welche mittels Netzwerkknoten miteinander verbunden sind. Die Teilnetzwerke können hierbei unterschiedliche Netzwerktypen und Netzwerkprotokolle besitzen. Das erfindungsgemäße Verfahren erlaubt nicht nur einen Zugriff auf Feldgeräte, sondern auch auf die einzelnen Netzwerkknoten (sofern diese eine Bedienung mittels der ersten Rahmenapplikation erlauben).

Bei einem Netzwerkknoten handelt es sich um ein Netzwerkgerät, welches die einzelnen Netzwerkebenen miteinander verbindet. Gegebenenfalls führen die Netzwerkknoten eine Protokollübersetzung zwischen den jeweils verbundenen Netzwerkebenen durch. Je nach Typ der verbundenen Netzwerkebenen handelt es sich bei den Netzwerkknoten beispielsweise um Gateways, Remote IOs, Links, Koppler, Protokollumsetzer, Multiplexer etc.

Bei einem Remote-IO handelt es sich z.B. um einen lokalen Verteilerknoten, an den ein oder mehrere Feldgeräte oder Netzwerkknoten angeschlossen werden können. Der Remote-IO dient in erster Linie zur Verringerung des Verkabelungsaufwands. Anstatt jede Komponente einzeln mit einem entfernten Feldbusnetzwerk zu verkabeln, wird ein Remote-IO als Verteilerknoten an das Kommunikationsnetzwerk angeschlossen, und über den Remote-IO wird der Datenverkehr an verschiedene in der Nachbarschaft befindliche Feldgeräte weitergeleitet. Bei einem Remote-IO steht der Aspekt der lokalen Verteilung des Datenverkehrs im Vordergrund.

Bei einem Gateway geht es in erster Linie um die Kopplung zwischen unterschiedlichen Netzwerkebenen. Dabei sorgt der Gateway für eine geeignete Umsetzung des Datenverkehrs zwischen den einzelnen Netzwerkebenen. Diese Umsetzung kann eine Protokollumsetzung beinhalten, dies ist jedoch nicht zwingend.

Bei einem Protokollumsetzer steht dagegen die Protokollumsetzung im Vordergrund. Der ankommende Datenverkehr wird aus einem ersten Feldbusprotokoll in ein zweites Feldbusprotokoll bzw. in umgekehrter Richtung aus dem zweiten Protokoll in das erste Protokoll umgesetzt.

Bei einem Multiplexer steht die Erweiterung des verfügbaren Adressbereichs im Vordergrund. Der Multiplexer stellt einen Adressbereich zur Verfügung, über den eine Vielzahl von an den Multiplexer angeschlossenen Geräten adressiert werden kann. Entsprechend der Adressierung wird der ankommende Datenverkehr dann zum jeweiligen Zielgerät geroutet.

Alternativ wird die Feldbuszugriffseinheit durch ein Edge Device repräsentiert, welche für eine zweite Rahmenapplikation kompatible Zugriffsschnittstellen aufweist.

Bei dem zweiten Kommunikationsnetzwerk handelt es sich beispielsweise um eine Internet-/Intranetverbindung zwischen Client-Rechner und Feldbuszugriffseinheit, welche drahtlos oder drahtgebunden realisiert sein kann.

Feldgeräte, welche im Zusammenhang mit dem erfindungsgemäßen Verfahren erwähnt werden, sind bereits im einleitenden Teil der Beschreibung beispielhaft beschrieben worden.

Es kann des Weiteren vorgesehen dass, dass die Verknüpfung zusätzlich ein Pfadfeld aufweist. In diesem Pfadfeld sind beispielsweise Topologieinformationen enthalten. Diese Topologieinformationen erlauben ein schnelleres Auffinden des Feldgeräts, bzw. des Knotenpunkts. Beispiele für solche Topologieinformationen sind beispielsweise der Anlagenteil und/oder die Netzwerkebene, in welchen sich das Feldgerät befindet und/oder der Netzwerkknoten, welcher dem zu bedienenden Feldgerät/Netzwerkknoten übergeordnet ist.

Gemäß einer ersten Variante des erfindungsgemäßen Verfahrens ist vorgesehen, dass der konfigurierte Kommunikationspfad zwischen dem Client-Rechner und dem Feldgerät etabliert wird, wobei das Feldgerät mittels der ersten Rahmenapplikation über den etablierten Kommunikationspfad bedient wird, wobei das Bedienen insbesondere ein Abfragen von von dem Feldgerät erzeugten Daten, ein Parametrieren, bzw. Re-Parametrieren des Feldgeräts und/oder ein Abfragen von Diagnosemeldungen des Feldgeräts umfasst. Hierbei handelt es sich um ein "online"-Verfahren, da jederzeit eine Verbindung zu dem Feldgerät besteht. Der Zugriff auf das jeweilige Feldgerät, bzw. auf den Netzwerkknoten, erfolgt mittels eines speziellen Kommunikationstreibers, welcher auf der ersten Rahmenapplikation des Client-Rechners ausgeführt wird und welcher auf die in der Feldbuszugriffseinheit ausgeführte erste Rahmenapplikation zugreift.

Gemäß einer zweiten Variante des erfindungsgemäßen Verfahrens ist vorgesehen, dass zu einem ersten Zeitpunkt Bedienbefehle in dem geöffneten Gerätetreiber platziert werden und gespeichert werden, wobei keine Verbindung zwischen Feldgerät und Client-Rechner besteht. Es handelt sich hierbei um ein "offline"-Verfahren. Der Gerätetreiber stellt zwar alle Funktionalitäten bereit - diese werden allerdings mangels eine Verbindung zu dem Feldgerät noch nicht ausgeführt. Beispielsweise kann der Bediener mittels Eingabemasken Parameterwerte für Parameter des Feldgeräts einstellen. Diese Einstellungen werden daraufhin gespeichert.

Gemäß einer vorteilhaften Weiterbildung der ersten Variante des erfindungsgemäßen Verfahrens ist vorgesehen, dass zu einem zweiten Zeitpunkt der konfigurierte Kommunikationspfad zwischen dem Client-Rechner und dem Feldgerät etabliert wird und die Bedienbefehle ausgeführt werden. Der zweite Zeitpunkt befindet sich dabei nach dem ersten Zeitpunkt. Im Falle der oben aufgeführten Parameteränderung werden die den einzelnen Parametern zugeordneten Parameterwerte an das Feldgerät übermittelt und in dieses geschrieben. Auch in diesem Fall erfolgt der Zugriff auf das jeweilige Feldgerät, bzw. auf den Netzwerkknoten, mittels eines speziellen Kommunikationstreibers, welcher auf der ersten Rahmenapplikation des Client-Rechners ausgeführt wird und welcher auf die in der Feldbuszugriffseinheit ausgeführte erste Rahmenapplikation zugreift.

Gemäß einer vorteilhaften Ausgestaltung des erfindungsgemäßen Verfahrens ist vorgesehen, dass zumindest eine der folgenden im Parameterfeld enthaltenen Informationen übergeben wird:
- eine Netzwerksadresse der Feldzugriffseinheit;
- eine Netzwerkadresse des Feldgeräts;
- ein Netzwerkpfad des Feldgeräts oder
- eine Identifikationsinformation des Feldgeräts.

Bei den Identifikationsinformationen handelt es sich um Merkmale, mit deren Hilfe ein Feldgerät eindeutig identifiziert werden kann. Beispielweise handelt es sich hierbei um den TAG des Feldgeräts, dessen Seriennummer, dessen Hersteller-ID oder um einer Kombination mehrerer dieser Merkmale handeln.

Gemäß einer bevorzugten Weiterbildung des erfindungsgemäßen Verfahrens ist vorgesehen, dass die Verknüpfung aus einer auf einem entfernt angeordneten Server befindlichen, insbesondere mittels des Internets auf dem Client-Rechner ausführbaren, Webapplikation oder einer zu der ersten Rahmenapplikation verschiedenen, auf der Rechnereinheit ausführbaren Applikation aufgerufen wird.

In einer vorteilhaften Ausgestaltung des erfindungsgemäßen Verfahrens ist vorgesehen, dass die Verknüpfung mittels eines Webbrowsers des Client-Rechners ausgeführt wird. Beispielsweise ist die Verknüpfung direkt in einer Website eines Plant Asset Management-Systems integriert.

Gemäß einer alternativen bevorzugten Weiterbildung des erfindungsgemäßen Verfahrens ist vorgesehen, dass die Verknüpfung durch Öffnen einer auf dem Client-Rechner ausführbaren Datei aufgerufen wird.

Gemäß einer weiteren alternativen bevorzugten Weiterbildung des erfindungsgemäßen Verfahrens ist vorgesehen, dass wobei die Verknüpfung mittels des Client-Rechners aus einem QR-Code oder aus einem NFC-Tag ausgelesen wird. In diesem Fall besitzt der Client-PC ein integriertes Modul oder ein Zusatzmodul, mit dessen Hilfe der QR-Code oder der NFC-Tag auslesbar ist. Im Fall des QR-Codes handelt es sich bei dem Modul um ein Modul zur Erfassung optischer Informationen, insbesondere um eine Kamera. Im Falle eines NFC-Tags handelt es sich bei dem Modul um einen NFC-Leser. Der NFC-Tag oder der QR-Code sind beispielsweise an dem Feldgerät in der Anlage angebracht, welches bedient werden soll. Ein Servicetechniker, welcher sich bei dem Feldgerät befindet, kann durch Auslesen der Verknüpfung eine direkte Verbindung zu dem Feldgerät aufbauen. Alternativ kann sich der QR-Code auch auf einem Anlagenplan oder auf einem dem Feldgerät zugeordneten physischem Dokument, beispielsweise einem Lieferschein oder einer Bedienungsanleitung, befinden.

Gemäß einer bevorzugten Ausgestaltung des erfindungsgemäßen Verfahrens ist vorgesehen, die zumindest eine in dem Parameterfeld enthaltene Information zuerst an eine Zwischenkomponente übergeben wird, welche insbesondere die Information in ein zur ersten Rahmenapplikation kompatibles Datenformat konvertiert, und wobei die Zwischenkomponente die Information an die erste Rahmenapplikation übergibt.

Gemäß einer vorteilhaften Ausgestaltung des erfindungsgemäßen Verfahrens ist vorgesehen, durch das Aufrufen der Verknüpfung eine Shell-Anwendung auf dem Client-Rechner erzeugt und ausgeführt wird, welche die dem Aufrufen der Verknüpfung nachfolgenden Schritte initiiert und koordiniert. Durch eine Shell-Anwendung werden nacheinander mehrere definierte Befehle ausgeführt.

Gemäß einer bevorzugten Weiterbildung des erfindungsgemäßen Verfahrens ist vorgesehen, der Client-Rechner nach dem Aufrufen der Verknüpfung eine Plausibilitätsprüfung ausführt und wobei die die dem Aufrufen der Verknüpfung nachfolgenden Schritte nur in dem Fall veranlasst werden, dass die Plausibilitätsprüfung erfolgreich durchgeführt wird. Die Plausibilitätsprüfung stellt sicher, dass die Verknüpfung korrekt aufgebaut ist und beispielsweise nicht von Unbefugten manipuliert wurde. Es kann auch vorgesehen sein, im Parameterfeld der Verknüpfung eine Prüfsumme einzufügen. Nur bei korrekter Prüfsumme ist sichergestellt, dass die Verknüpfung korrekt und authentisch ist.

Gemäß einer vorteilhaften Ausgestaltung des erfindungsgemäßen Verfahrens ist vorgesehen, die Plausibilitätsprüfung eine semantische Prüfung der Verknüpfung umfasst. So wird beispielsweise geprüft, ob die verschiedenen Felder (Protokollfeld, Datenfeld, etc.) korrekt voneinander abgegrenzt sind. Es kann auch vorgesehen sein zu prüfen, ob korrekte Komponenten angesprochen werden, beispielsweise, ob das zu bedienende Feldgerät überhaupt existiert oder ob die Netzwerkinfrastruktur überhaupt wie in der Verknüpfung angegeben existiert.

Gemäß einer bevorzugten Ausgestaltung des erfindungsgemäßen Verfahrens ist vorgesehen, wobei als Teilkomponente des etablierten Kommunikationspfads ein zweites Kommunikationsnetzwerk, insbesondere ein lokales Netzwerk oder das Internet, welches den Client-Rechner und die Feldzugriffseinheit verbindet, verwendet wird. Das zweite Kommunikationsnetzwerk kann hierbei auch als Funknetzwerk, beispielsweise WiFi, ausgestaltet sein.

Die Erfindung wird anhand der nachfolgenden Figuren näher erläutert. Es zeigen
Fig. 1: einen schematischen Überblick über einen Abschnitt einer Anlage der Prozessautomatisierung, und
Fig 2: ein Ausführungsbeispiel des erfindungsgemäßen Verfahrens.

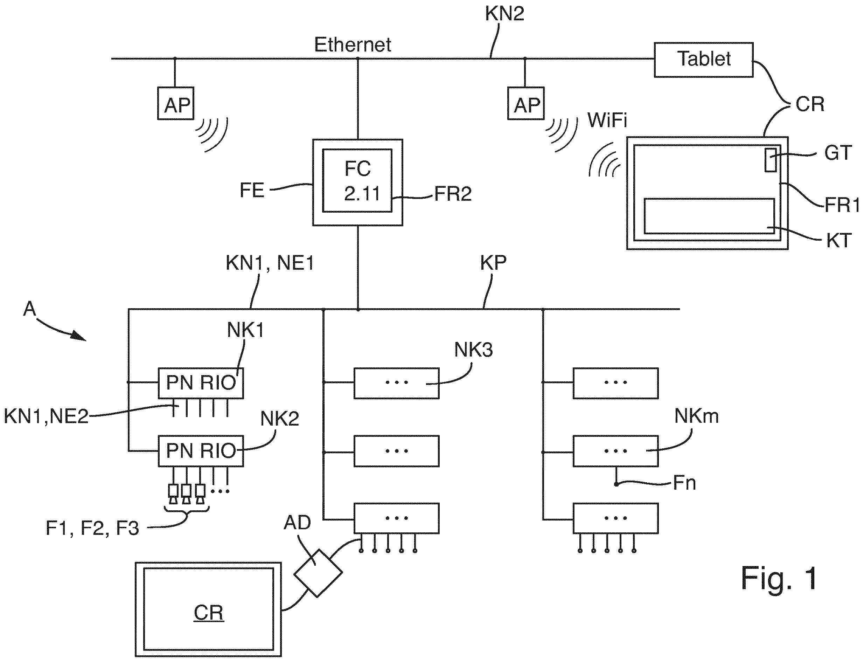

Fig. 1 zeigt einen schematischen Überblick über einen Abschnitt einer Anlage A der Prozessautomatisierung. An einem ersten Kommunikationsnetzwerk KN1 ist eine Vielzahl von Feldgeräten F1, F2, F3, ..., Fn angeschlossen. Das erste Kommunikationsnetzwerk KN1 besteht hierbei aus mehreren Netzwerkebenen NE1, NE2. In einer ersten Netzwerkebene NE1 sind mehrere Netzwerkknoten NK1, NK2, NK3, ..., NKm in Gestalt von Remote-IOs mittels eines Profinet-Feldbusses miteinander verbunden. An jedem der Netzwerkknoten NK1, NK2, NK3, ..., NKm ist eine Vielzahl von Feldgeräten F1, F2, F3 mittels HART-Kommunikationsschleifen, welche jeweils eine zweite Netzwerkebene NE2 bilden, verbunden.

An die erste Netzwerkebene NE1 ist eine Feldbuszugriffseinheit FE angeschlossen. Bei dieser handelt es sich beispielsweise um einen Rechner. Auf der Feldbuszugriffseinheit FE ist eine zweite Rahmenapplikation ausgeführt, mittels welcher die einzelnen Feldgeräte F1, F2, F3, ..., Fn bedient und/oder überwacht werden können. Mittels einer zusätzlichen Schnittstelle ist die Feldbuszugriffseinheit an ein Ethernet-Netzwerk angeschlossen. Dieses bildet beispielsweise das Netzwerk der Leitebene der Anlage A. An dem Ethernet-Netzwerk sind ein oder mehrere Access Points angeschlossen. Diese gewähren einen Zugriff auf das Ethernet-Netzwerk mittels einer Drahtlosverbindung, beispielsweise WiFi.

Zur Bedienung der Feldgeräte F1, F2, F3, ..., Fn kann zusätzlich eine Bedieneinheit in Form eines Client-Rechners CR verwendet werden. Hierfür kann der Client-Rechner CR direkt an eine HART-Kommunikationsschleife eines Feldgeräts F1, F2, F3, ..., Fn angeschlossen werden. Hierfür wird ein spezieller Adapter AD, welcher ein HART-Modem darstellt, benötigt. Auf diese Art und Weise kann aber nur jeweils eines der Feldgeräte F1, F2, F3, ..., Fn zu einem Zeitpunkt bedient werden.

Alternativ kann daher der Client-PC mittels eines zweiten Kommunikationsnetzwerks KN2 mit der Feldbuszugriffseinheit FE verbunden werden. Das zweite Kommunikationsnetzwerk besteht in diesem Fall aus einer WiFi-Funkverbindung zwischen dem Client-Rechner CR und der Feldbuszugriffseinheit FE.

Ist dem Client-Rechner die Netzwerkadresse eines Feldgeräts F1, F2, F3, ..., Fn bekannt, so kann dieser über die Feldbuszugriffseinheit FE auf das Feldgerät F1, F2, F3, ..., Fn zugreifen. Hierfür ist auf dem Client-Rechner eine erste Rahmenapplikation FR1 ausgeführt. Mithilfe eines speziellen Kommunikationstreibers KT, beispielsweise dem von der Anmelderin für die Rahmenapplikation "Fieldcare" angebotenen "YCommDTMs", welcher in der ersten Rahmenapplikation FR1 ausgeführt wird, ist es möglich, auf die zweite Rahmenapplikation FR2 der Feldbuszugriffseinheit FE zuzugreifen und über diese einen Kommunikationspfad KP zwischen Client-Rechner CR und Feldgerät F1, F2, F3, ..., Fn zu etablieren und Zugriff auf das Feldgerät F1, F2, F3, ..., Fn zu erlangen. Auf diese Art und Weise ist es auch möglich, mehrere Feldgeräte F1, F2, F3, ..., Fn gleichzeitig zu bedienen und/oder zu überwachen.

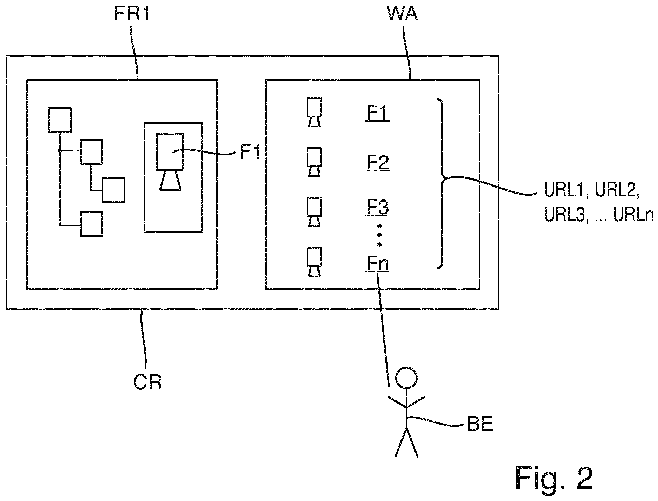

Fig. 2 zeigt ein Ausführungsbeispiel des erfindungsgemäßen Verfahrens.Wie bereits im einleitenden Teil der Beschreibung dargelegt, werden auf Client-Rechnern CR häufig Web-Anwendungen WA für Asset-Management-Systeme ausgeführt. Diese greifen beispielsweise auf entfernt angeordnete Server, sogenannte Cloud Server zu, auf welchen das eigentliche Asset-Management-System implementiert ist (beispielsweise das von der Anmelderin angebotene "W@M"-System). Beispielsweise wird die Anwendung in einem Browser des Client-Rechners CR geöffnet und stellt in diesem die von dem Server zu Verfügung gestellten Inhalte dar. Beispielsweise werden alle Feldgeräte F1, F2, F3, ..., Fn angezeigt, welche sich in der Anlage A befinden.

Bisher musste zum Bedienen eines der Feldgeräte F1, F2, F3, ..., Fn der Kommunikationspfad KP zwischen Client-Rechner CR und Feldgerät F1, F2, F3, ..., Fn manuell in der ersten Rahmenapplikation FR1 konfiguriert werden, was ein aufwendiges Verfahren darstellt.

In einem ersten Verfahrensschritt des erfindungsgemäßen Verfahrens wird einem Bediener BE die Web-Applikation auf seinem Client-Rechner CR angezeigt. Neben den angezeigten Feldgeräte F1, F2, F3, ..., Fn sind Verknüpfungen URL1, URL2, URL3, ... URLn angezeigt. Diese Verknüpfungen URL1, URL2, URL3, ... URLn sind insbesondere URL-Verknüpfungen. Zum Verbinden mit einem der Feldgeräte F1, F2, F3, ..., Fn klickt der Bediener auf die dem Feldgerät F1, F2, F3, ..., Fn zugeordnete Verknüpfung URL1, URL2, URL3, ... URLn.

In einem zweiten Verfahrensschritt führt das Betriebssystem des Client-Rechners CR eine Plausibilitätsprüfung der Verknüpfung URL1, URL2, URL3, ... URLn durch und prüft insbesondere deren Semantik.

Ist die Plausibilitätsprüfung erfolgreich abgeschlossen, so öffnet das Betriebssystem in einem dritten Verfahrensschritt die im Protokollfeld der Verknüpfung URL1, URL2, URL3, ... URLn angegebene erste Rahmenapplikation FR1. Hierfür muss die im Protokollfeld der Verknüpfung URL1, URL2, URL3, ... URLn angegebene Bezeichnung vorab in der Registry des Betriebssystems des Client-Rechners CR mit der ersten Rahmenapplikation FR1 verknüpft werden.

In einem vierten Verfahrensschritt wird die Verknüpfung URL1, URL2, URL3, ... URLn an die erste Rahmenapplikation FR1 übergeben. Die erste Rahmenapplikation parst die Verknüpfung URL1, URL2, URL3, ... URLn und extrahiert die im Parameterfeld der Verknüpfung URL1, URL2, URL3, ... URLn enthaltenen Informationen, beispielsweise die Netzwerkadresse des Felgeräts F1, F2, F3, ..., Fn oder dessen Identifikationsinformationen.

Diese Informationen werden verwendet, um in einem fünften Verfahrensschritt den Kommunikationspfad KP zwischen Client-Rechner CR und Feldgerät F1, F2, F3, ..., Fn zu konfigurieren und um den passenden Gerätetreiber GT in der ersten Rahmenapplikation FR1 zu öffnen.

In einem sechsten Verfahrensschritt wird das Feldgerät F1, F2, F3, ..., Fn bedient. Hierfür sind zwei Varianten denkbar: Zum einen kann das Feldgerät F1, F2, F3, ..., Fn online bedient werden. Hierfür wird der konfigurierte Kommunikationspfad KP etabliert, also aufgebaut. Anschließend wird live auf das Feldgerät F1, F2, F3, ..., Fn zugegriffen.

Zum anderen kann das Feldgerät F1, F2, F3, ..., Fn offline bedient werden. Es besteht also in diesem Fall keine Kommunikationsverbindung zu dem Feldgerät F1, F2, F3, ..., Fn. Der Gerätetreiber GT hier stellt zwar alle Bedienfunktionalitäten bereit - diese werden allerdings mangels einer Verbindung zu dem Feldgerät F1, F2, F3, ..., Fn jedoch noch nicht auf diesem ausgeführt. Die gewählten Bedienfunktionen werden aber in dem Gerätetreiber GT gespeichert und werden an das Feldgerät F1, F2, F3, ..., Fn übertragen, sobald der Kommunikationspfad KP zwischen Feldgerät und Client-Rechner CR etabliert ist.

Es kann alternativ auch vorgesehen sein, anstatt des Feldgeräts F1, F2, F3, ..., Fn eine Verknüpfung URL1, URL2, URL3, ... URLn eines Netzwerkknotens NK1, NK2, NK3, ..., NKm auszuwählen und diesen zu bedienen.

### Bezugszeichenliste

- A: Anlage der Automatisierungstechnik
- AD: Adapter
- BE: Bediener
- CR: Client-Rechner
- F1, F2, F3, ..., Fn: Feldgeräte
- FE: Feldbuszugriffseinheit
- FR1: ersten Rahmenapplikation
- FR2: zweite Rahmenapplikation
- GT: Gerätetreiber
- KN1: erstes Kommunikationsnetzwerk
- KN2: zweites Kommunikationsnetzwerk
- KP: Kommunikationspfad
- KT: Kommunikationstreiber
- NE1, NE2: Netzwerkebenen
- NK1, NK2, NK3, ..., NKm: Netzwerkknoten
- URL1, URL2, URL3, ... URLn: Verknüpfung
- WA: Webapplikation

## Patentansprüche

1. Verfahren zum Betreiben eines in einer Anlage (A) der Automatisierungstechnik eingesetzten Feldgeräts (F1, F2, F3, ..., Fn), welches mittels eines ersten drahtgebunden oder drahtlos ausgestalteten Kommunikationsnetzwerks (KN1), insbesondere mittels eines Feldbusses der Automatisierungstechnik, mit einer Feldzugriffseinheit (FE), insbesondere mit einer Recheneinheit, mit einem Gateway oder mit einem Edge Device, in Kommunikationsverbindung steht, umfassend:
- Aufrufen einer Verknüpfung (URL1, URL2, URL3, ... URLn) des Feldgeräts (F1, F2, F3, ..., Fn) auf einem Client-Rechner (CR), wobei die Verknüpfung (URL1, URL2, URL3, ... URLn) zumindest aus einem Protokollfeld und einem Parameterfeld besteht, wobei das Aufrufen der Verknüpfung (URL1, URL2, URL3, ... URLn) die folgenden Schritte veranlasst:
a) Starten einer mit dem Protokollfeld der Verknüpfung (URL1, URL2, URL3, ... URLn) zugeordneten ersten Rahmenapplikation (FR1) auf dem Client-Rechner (CR), insbesondere einer FDT-Rahmenapplikation, eines FDI-Hosts, eines DD-Hosts oder eines EDD-Hosts;
b) Übergeben der Verknüpfung (URL1, URL2, URL3, ... URLn) an die erste Rahmenapplikation (FR1) und Extrahieren von zumindest einer in dem Parameterfeld enthaltenen Information durch die erste Rahmenapplikation (FR1);
c) Konfigurieren eines Kommunikationspfads (KP) zwischen dem Client-Rechner (CR) und dem Feldgerät (F1, F2, F3, ..., Fn) über die Feldzugriffseinheit (FE) unter Verwendung der zumindest einen Information;
d) Öffnen eines dem Feldgerät (F1, F2, F3, ..., Fn) zugeordneten Gerätetreibers (GT), bzw. einer dem Feldgerät (F1, F2, F3, ..., Fn) zugeordneten Gerätebeschreibung in der ersten Rahmenapplikation (FR1).

2. Verfahren nach Anspruch 1, wobei der konfigurierte Kommunikationspfad (KP) zwischen dem Client-Rechner (CR) und dem Feldgerät (F1, F2, F3, ..., Fn) etabliert wird, wobei das Feldgerät (F1, F2, F3, ..., Fn) mittels der Rahmenapplikation (FR1) über den etablierten Kommunikationspfad (KP) bedient wird, wobei das Bedienen insbesondere ein Abfragen von von dem Feldgerät (F1, F2, F3, ..., Fn) erzeugten Daten, ein Parametrieren, bzw. Re-Parametrieren des Feldgeräts (F1, F2, F3, ..., Fn) und/oder ein Abfragen von Diagnosemeldungen des Feldgeräts (F1, F2, F3, ..., Fn) umfasst.

3. Verfahren nach Anspruch 1, wobei zu einem Zeitpunkt Bedienbefehle in dem geöffneten Gerätetreiber (GT) platziert werden und gespeichert werden, wobei keine Verbindung zwischen Feldgerät (F1, F2, F3, ..., Fn) und Client-Rechner (CR) besteht.

4. Verfahren nach Anspruch 3, wobei zu einem zweiten Zeitpunkt der konfigurierte Kommunikationspfad (KP) zwischen dem Client-Rechner (CR) und dem Feldgerät (F1, F2, F3, ..., Fn) etabliert wird und die Bedienbefehle ausgeführt werden.

5. Verfahren nach zumindest einem der vorherigen Ansprüche, wobei zumindest eine der folgenden im Parametersatz enthaltenen Informationen übergeben wird:
- eine Netzwerksadresse der Feldzugriffseinheit (FE);
- eine Netzwerkadresse des Feldgeräts (F1, F2, F3, ..., Fn);
- ein Netzwerkpfad des Feldgeräts (F1, F2, F3, ..., Fn) oder
- eine Identifikationsinformation des Feldgeräts (F1, F2, F3, ..., Fn).

6. Verfahren nach zumindest einem der Ansprüche 1 bis 5, wobei die Verknüpfung (URL1, URL2, URL3, ... URLn) aus einer auf einem entfernt angeordneten Server befindlichen, insbesondere mittels des Internets auf dem Client-Rechner (CR) ausführbaren, Webapplikation oder einer zu der ersten Rahmenapplikation (FR1) verschiedenen, auf der Rechnereinheit ausführbaren Applikation aufgerufen wird.

7. Verfahren nach Anspruch 6, wobei die Verknüpfung mittels eines Webbrowsers des Client-Rechners (CR) ausgeführt wird.

8. Verfahren nach zumindest einem der Ansprüche 1 bis 5, wobei die Verknüpfung (URL1, URL2, URL3, ... URLn) durch Öffnen einer auf dem Client-Rechner (CR) ausführbaren Datei aufgerufen wird.

9. Verfahren nach einem der Ansprüche 1 bis 5, wobei die Verknüpfung (URL1, URL2, URL3, ... URLn) mittels des Client-Rechners (CR) aus einem QR-Code oder aus einem NFC-Tag ausgelesen wird.

10. Verfahren nach zumindest einem der vorherigen Ansprüche, wobei die zumindest eine in dem Parameterfeld enthaltene Information zuerst an eine Zwischenkomponente übergeben wird, welche insbesondere die Information in ein zur ersten Rahmenapplikation (FR1) kompatibles Datenformat konvertiert, und wobei die Zwischenkomponente die Information an die erste Rahmenapplikation (FR1) übergibt.

11. Verfahren nach zumindest einem der vorherigen Ansprüche, wobei durch das Aufrufen der Verknüpfung (URL1, URL2, URL3, ... URLn) eine Shell-Anwendung auf dem Client-Rechner (CR) erzeugt und ausgeführt wird, welche die dem Aufrufen der Verknüpfung (URL1, URL2, URL3, ... URLn) nachfolgenden Schritte initiiert und koordiniert.

12. Verfahren nach zumindest einem der vorherigen Ansprüche, wobei der Client-Rechner (CR) nach dem Aufrufen der Verknüpfung (URL1, URL2, URL3, ... URLn) eine Plausibilitätsprüfung ausführt und wobei die die dem Aufrufen der Verknüpfung (URL1, URL2, URL3, ... URLn) nachfolgenden Schritte nur in dem Fall veranlasst werden, dass die Plausibilitätsprüfung erfolgreich durchgeführt wird.

13. Verfahren nach Anspruch 12, wobei die Plausibilitätsprüfung eine semantische Prüfung der Verknüpfung (URL1, URL2, URL3, ... URLn) umfasst.

14. Verfahren nach zumindest einem der vorherigen Ansprüche, wobei als Teilkomponente des etablierten Kommunikationspfads (KP) ein zweites Kommunikationsnetzwerk (KN2), insbesondere ein lokales Netzwerk oder das Internet, welches den Client-Rechner (CR) und die Feldzugriffseinheit (FE) verbindet, verwendet wird.

## Claims

1. Procedure to operate a field device (F1, F2, F3, ..., Fn) used in an automation engineering installation (A) wherein said field device has a communication connection with a field access unit (FE), particularly with a computing unit, a gateway or an edge device, by means of a first wired or wireless communication network (KN1), particularly by means of a fieldbus used in automation engineering, wherein said procedure comprises the following step:
- Calling up of a link (URL1, URL2, URL3, ... URLn) of the field device (F1, F2, F3, ..., Fn) on a client computer (CR), wherein the link (URL1, URL2, URL3, ... URLn) consists at least of a protocol field and a parameter field, wherein the calling up of the link (URL1, URL2, URL3, ... URLn) causes the following steps:
a) Starting of a first framework application (FR1) assigned to the protocol field of the link (URL1, URL2, URL3, ... URLn) on the client computer (CR),
particularly an FDT framework application, an FDI host, a DD host or an EDD host;
b) Transmission of the link (URL1, URL2, URL3, ... URLn) to the first framework application (FR1) and extraction, by the first framework application (FR1), of at least one item of
information contained in the parameter field;
c) Configuration of a communication path (KP) between the client computer (CR) and the field device (F1, F2, F3, ..., Fn) via the field access unit
(FE) using said at least one item of information;
d) Opening of a device driver (GT) assigned to the field device (F1, F2,
F3, ..., Fn) or a device description assigned to the field device (F1, F2, F3, ..., Fn) in the first framework application (FR1).

2. Procedure as claimed in Claim 1, wherein the configured communication path (KP) is established between the client computer (CR) and the field device (F1, F2, F3, ..., Fn), wherein the field device (F1, F2, F3, ..., Fn) is operated by means of the framework application (FR1) via the established communication path (KP), wherein the operation particularly comprises an interrogation of data generated by the field device (F1, F2, F3, ..., Fn), a parameterization or reparameterization of the field device (F1, F2, F3, ..., Fn) and/or an interrogation of diagnostic messages of the field device (F1, F2, F3, ..., Fn).

3. Procedure as claimed in Claim 1, wherein operating commands are placed and saved in the open device driver (GT) at a time when no connection exists between the field device (F1, F2, F3, ..., Fn) and the client computer (CR).

4. Procedure as claimed in Claim 3, wherein, at a second time, the configured communication path (KP) is established between the client computer (CR) and the field device (F1, F2, F3, ..., Fn) and the operating commands are executed.

5. Procedure as claimed in at least one of the previous claims, wherein at least one of the following items of information contained in the parameter set is transmitted:
- a network address of the field access unit (FE);
- a network address of the field device (F1, F2, F3, ..., Fn);
- a network path of the field device (F1, F2, F3, ..., Fn) or
- identification information of the field device (F1, F2, F3, ..., Fn).

6. Procedure as claimed in at least one of the Claims 1 to 5, wherein the link (URL1, URL2, URL3, ... URLn) is called up from a web application located on a remote server, wherein said application is particularly executable on the client computer (CR) by means of the Internet or from an application that is different to the first framework application (FR1) and can be executed on the computer unit.

7. Procedure as claimed in Claim 6, wherein the link is executed by means of a web browser of the client computer (CR).

8. Procedure as claimed in at least one of the Claims 1 to 5, wherein the link (URL1, URL2, URL3, ... URLn) is called by opening an executable file on the client computer (CR).

9. Procedure as claimed in one of the Claims 1 to 5, wherein the link (URL1, URL2, URL3, ... URLn) is read from a QR code or an NFC tag using the client computer (CR).

10. Procedure as claimed in at least one of the previous claims, wherein the at least one item of information contained in the parameter field is first transmitted to an intermediate component, which particularly converts the information to a data format that is compatible with the first framework application (FR1), and wherein the intermediate component transmits the information to the first framework application (FR1).

11. Procedure as claimed in at least one of the previous claims, wherein calling up the link (URL1, URL2, URL3, ... URLn) generates and executes a shell application on the client computer (CR), which initiates and coordinates the steps that follow the calling up of the link (URL1, URL2, URL3, ... URLn).

12. Procedure as claimed in at least one of the previous claims, wherein following the calling up of the link (URL1, URL2, URL3, ... URLn) the client computer (CR) runs a plausibility check and wherein the steps following the calling up of the link (URL1 , URL2, URL3, ... URLn) are only initiated if the plausibility check is performed successfully.

13. Procedure as claimed in Claim 12, wherein le plausibility check comprises a semantic check of the link (URL1, URL2, URL3, URLn).

14. Procedure as claimed in at least one of the previous claims, wherein a second communication network (KN2), particularly a local network or the Internet, which connects the client computer (CR) and the field access unit (FE), is used as a subcomponent of the established communication path (KP).

## Revendications

1. Procédé destiné à l'exploitation d'un appareil de terrain (F1, F2, F3, ..., Fn) utilisé dans une installation (A) de la technique d'automatisation, lequel appareil de terrain est en liaison de communication avec une unité d'accès de terrain (FE), notamment avec une unité de calcul, avec une passerelle ou avec un Edge Device, au moyen d'un premier réseau de communication (KN1) conçu avec ou sans fil, notamment au moyen d'un bus de terrain de la technique d'automatisation, lequel procédé comprend l'étape suivante :
- Appel d'un lien (URL1, URL2, URL3, ... URLn) de l'appareil de terrain (F1, F2, F3, ..., Fn) sur un ordinateur client (CR), la liaison (URL1, URL2, URL3, ... URLn) étant constituée d'au moins un champ de protocole et un champ de paramètre, l'appel de la liaison (URL1, URL2, URL3, ... URLn) déclenchant les étapes suivantes :
a) Démarrage d'une première application cadre (FR1) associée au champ de protocole du lien (URL1, URL2, URL3, ... URLn) sur l'ordinateur client (CR), notamment une application cadre FDT, un hôte FDI, un hôte DD ou un hôte EDD;
b) Transmission du lien (URL1, URL2, URL3, ... URLn) à la première application cadre (FR1) et extraction d'au moins une information contenue dans le champ de paramètres par la première application cadre (FR1) ;
c) Configuration d'un chemin de communication (KP) entre l'ordinateur client (CR) et l'appareil de terrain (F1, F2, F3, ..., Fn) via l'unité d'accès de terrain (FE) en utilisant ladite au moins une information ;
d) Ouverture d'un driver d'appareil (GT) associé à l'appareil de terrain (F1, F2, F3, ..., Fn) ou d'une description d'appareil associée à l'appareil de terrain (F1, F2, F3, ..., Fn) dans la première application cadre (FR1).

2. Procédé selon la revendication 1, pour lequel le chemin de communication configuré (KP) est établi entre l'ordinateur client (CR) et l'appareil de terrain (F1, F2, F3, ..., Fn), l'appareil de terrain (F1, F2, F3, ..., Fn) étant commandé au moyen de l'application cadre (FR1) par l'intermédiaire du chemin de communication établi (KP), la commande comprenant notamment une interrogation de données générées par l'appareil de terrain (F1, F2, F3, ..., Fn), un paramétrage ou un reparamétrage de l'appareil de terrain (F1, F2, F3, ..., Fn) et/ou une interrogation de messages de diagnostic de l'appareil de terrain (F1, F2, F3, ..., Fn).

3. Procédé selon la revendication 1, pour lequel des instructions de commande sont placées et mémorisées dans le driver d'appareil ouvert (GT) à un instant où il n'existe aucune liaison entre l'appareil de terrain (F1, F2, F3, ..., Fn) et l'ordinateur client (CR).

4. Procédé selon la revendication 3, pour lequel, à un deuxième instant, le chemin de communication configuré (KP) entre l'ordinateur client (CR) et l'appareil de terrain (F1, F2, F3, ..., Fn) est établi et les instructions de commande sont exécutées.

5. Procédé selon au moins l'une des revendications précédentes, pour lequel on transmet au moins l'une des informations suivantes contenues dans le jeu de paramètres :
- une adresse réseau de l'unité d'accès de terrain (FE) ;
- une adresse réseau de l'appareil de terrain (F1, F2, F3, ..., Fn) ;
- un chemin réseau de l'appareil de terrain (F1, F2, F3, ..., Fn) ou
- une information d'identification de l'appareil de terrain (F1, F2, F3, ..., Fn).

6. Procédé selon au moins l'une des revendications 1 à 5, pour lequel le lien (URL1, URL2, URL3, ... URLn) est appelé à partir d'une application web se trouvant sur un serveur disposé à distance, laquelle application est notamment exécutable sur l'ordinateur client (CR) au moyen d'Internet, ou d'une application différente de la première application cadre (FR1), exécutable sur l'unité d'ordinateur.

7. Procédé selon la revendication 6, pour lequel le lien est exécuté au moyen d'un navigateur web de l'ordinateur client (CR).

8. Procédé selon au moins l'une des revendications 1 à 5, pour lequel le lien (URL1, URL2, URL3, ... URLn) est appelé en ouvrant un fichier exécutable sur l'ordinateur client (CR).

9. Procédé selon l'une des revendications 1 à 5, pour lequel le lien (URL1, URL2, URL3, ... URLn) est lu au moyen de l'ordinateur client (CR) à partir d'un QR code ou d'une étiquette NFC.

10. Procédé selon au moins l'une des revendications précédentes, pour lequel l'au moins une information contenue dans le champ de paramètres est d'abord transmise à un composant intermédiaire, lequel composant convertit notamment l'information dans un format de données compatible avec la première application cadre (FR1), et dans lequel le composant intermédiaire transmet l'information à la première application cadre (FR1).

11. Procédé selon au moins l'une des revendications précédentes, pour lequel l'appel du lien (URL1, URL2, URL3, ... URLn) génère et exécute une application de shell sur l'ordinateur client (CR), qui initie et coordonne les étapes qui suivent l'appel du lien (URL1, URL2, URL3, ... URLn).

12. Procédé selon au moins l'une des revendications précédentes, pour lequel l'ordinateur client (CR) exécute un contrôle de plausibilité après l'appel du lien (URL1, URL2, URL3, ... URLn) et pour lequel les étapes suivant l'appel du lien (URL1 , URL2, URL3, ... URLn) ne sont déclenchées que dans le cas où le contrôle de plausibilité est effectué avec succès.

13. Procédé selon la revendication 12, pour lequel le contrôle de plausibilité comprend un contrôle sémantique du lien (URL1, URL2, URL3, URLn).

14. Procédé selon au moins l'une des revendications précédentes, pour lequel on utilise comme sous-composant du chemin de communication établi (KP) un deuxième réseau de communication (KN2), notamment un réseau local ou l'Internet, qui relie l'ordinateur client (CR) et l'unité d'accès au terrain (FE).
